(19) Europäisches Patentamt
European Patent Office
Office européen des brevets

(11) **EP 1 850 509 B1**

(12) **EUROPEAN PATENT SPECIFICATION**

(45) Date of publication and mention
of the grant of the patent:
**02.12.2009 Bulletin 2009/49**

(51) Int Cl.:
*H04B 7/155* (2006.01)  *H04L 25/02* (2006.01)

(21) Application number: **06008418.3**

(22) Date of filing: **24.04.2006**

(54) **Method and system for radio channel estimation in a wireless communication system, relay station and receiver**

Methode und System zur Funkkanal-Schätzung in einem drahtlosen Kommunikationssystem, Relaisstation und Empfänger

Méthode et système de l'estimation de canal dans un système de communication sans fils, répéteur et récepteur

(84) Designated Contracting States:
**DE GB**

(43) Date of publication of application:
**31.10.2007 Bulletin 2007/44**

(73) Proprietor: **NTT DoCoMo, Inc.**
**Chiyoda-Ku**
**Tokyo 100-6150 (JP)**

(72) Inventors:
• **Herdin, Markus**
**80634 München (DE)**
• **Auer, Gunther**
**80339 München (DE)**

(74) Representative: **Zinkler, Franz et al**
**Schoppe, Zimmermann, Stöckeler & Zinkler**
**Patentanwälte**
**Postfach 246**
**82043 Pullach bei München (DE)**

(56) References cited:
**EP-A- 1 564 911**  **WO-A-2006/024312**
**US-A1- 2005 014 464**

**Description**

The present invention concerns a method and a system for radio channel estimation in a wireless communication system. Further, the present invention concerns a relay station and a receiver in such a system. More particularly, the present invention concerns a pilot and chunk estimation scheme for chunk reordering OFDM (OFDM = Orthogonal Frequency Division Multiplexing) amplify-and-forward.

Multihop networks have gained a lot of interest in the mobile radio research community, as well as the sensor network research community. They are a promising solution to a major problem that will appear in the future mobile radio communication systems (4G = fourth Generation), namely the range. As higher carrier frequencies or center frequencies can be envisaged for future mobile radio communication systems, where the expected center frequencies range up to 5-10 GHz and with the large bandwidth requirements of up to 100 MHz that can be foreseen, a significantly increased path loss and noise power level has to be expected, which translates into a significantly reduced area a base station can cover, cf. Mohr W.; R. LUder; and Karl-Heinz Möhrmann, "Data Rate Estimates, Range Calculations and Spectrum Demands for New Elements of Systems beyond IMT-2000", 5th International Symposium on Wireless Personal Multimedia Communications, October 2002, vol. 1, pp. 37-46.

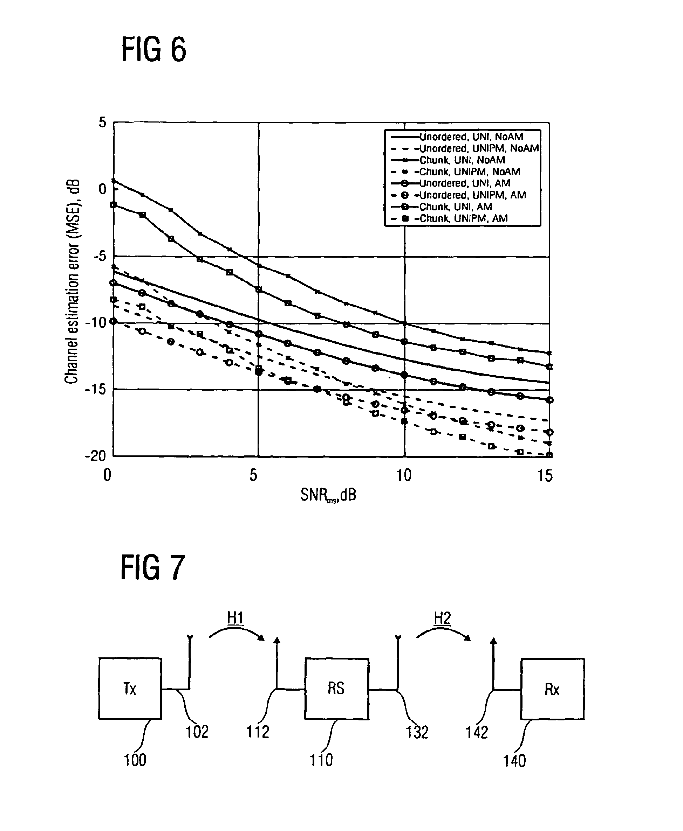

In order to circumvent the introduction of a denser grid of base stations, relay stations will be introduced that relay signals between base stations and far distant mobile stations, which are not able to directly communicate with the base stations. Such relay stations can be realized utilizing additional dedicated infrastructure relay stations having fixed power supplies, or they could be built in into other mobile stations. The general scenario is depicted in Fig. 7 showing a transmitter 100 that transmits a radio signal via an antenna 102 over a first radio channel $\underline{H}_1$ to a relay station (RS) 110. The relay station 110 receives the signal via an antenna 112 from the first radio channel $\underline{H}_1$ and forwards the signal via a further antenna 132 over a second radio channel $\underline{H}_2$ to a receiver 140 with a receive antenna 142. Since the receiver 140 is out of the range of the transmitter 100, Fig. 7 demonstrates how the relay station 110 extends the range of the transmitter.

Two main principles of relaying have been identified to be usable in such scenarios: Amplify-and-Forward (AF) and Decode-and-Forward (DF). AF means that a sampled version of the received signal is stored and retransmitted by the relay station without performing any decoding. Decode-and-Forward means that the relay station decodes and re-encodes the signal; hence more signal processing power is necessary.

There exist already a large number of publications on different aspects of multihop networks. Fundamental analysis by cooperative relaying systems was done by Laneman J. Nicholas; David N.C. Tse; and Gregory W. Wornell: "Cooperative Diversity in Wireless Networks: Efficient Protocols and Outage Behavior," IEEE Transactions on Information Theory, accepted for publication, who showed that amplify-and-forward schemes provide full diversity gains. Also Sendonaris Andrew; Elza Erkip; and Behnaam Aazhang: "User Cooperation Diversity, Part I, System description," IEEE Transactions on Communications, vol. 15, pages 1927-1938, November 2003 and Sendonaris Andrew; Elza Erkip; and Behnaam Aazhang: "User Cooperation Diversity, Part II, Implementation Aspects and Performance Analysis," IEEE Transactions on Communications, vol. 15, pages 1939-1948, November 2003 aim at achieving diversity using relay stations.

Other issues that were investigated in the past were distributed space-time coding as described by Hammerstroem Ingmar; Marc Kuhn; and Boris Rankov: "Space-Time Processing for Cooperative Relay Networks, " in Proc. IEEE Vehicular Technology Conference, October 2004); rank improvements of MIMO channels and single antenna relays are used, as described by Wittneben Armin; and Boris Rankov: "Impact of Cooperative Relays on the Capacity of Rank-Deficient MIMO Channels," in Proceedings of the 12th IST Summit on Mobile and Wireless Communications, Aveiro, Portugal, June 2003, pages 421-425; and reuse schemes, which avoid the capacity penalty factor of classical relaying, as discussed by Hu H.; H. Yanikomeroglu; D.D. Falconer; and S. Periyalwar: "Range extension without capacity penalty in cellular networks with digital fixed relays," in Proceedings of IEEE Global Telecommunications Conference, Texas, Dallas, November 2004.

The general problem in communication networks using relay stations as shown in Fig. 7 is the channel estimation at the receiver. The wireless signal passes only a single radio channel if a receiver communicates directly with a transmitter, the radio signal passes two independent radio channels in the scenario illustrated in Fig. 7. In order to enable proper channel estimation at the receiver, the transmitter inserts known pilot symbols into the transmit signal. Based on these known pilot symbols the receiver can utilize different algorithms to estimate the complex channel coefficients. In a transmission scenario as shown in Fig. 7, the transmitter inserts the known pilot symbols and transmits the signal on to the relay station. The relay station stores and forwards the signal and also the inserted pilot symbol. The receiver then receives the forwarded signal from the relay station and can estimate the channel based on the forwarded pilot symbols. With the simple Amplify-and-Forward scheme, the receiver has no means to distinguish the two independent radio channels between the transmitter and the relay station, namely the first radio channel $\underline{H}_1$, and between the relay station and the receiver, namely the second channel $\underline{H}_2$. In today's communication systems, where the transmitter is for example a base station and the receiver is for example a mobile station, the first part of the channel, the first radio

channel $\underline{H_1}$, can be assumed static, as the base station and the relay station are non-mobile, while the second part of the channel, the second radio channel $\underline{H_2}$, can be considered a Rayleigh fading channel since the mobile station is assumed to be mobile. While these assumptions would hold for downlink transmission, the situation changes for uplink transmission. In the uplink, the first part of the radio channel is between the transmitter (the mobile station) and the relay station, where again the mobile station is assumed mobile, and the second part of the radio channel, which is between the relay station and the base station can be considered static. In both directions, the receiver is only able to estimate the channel as a whole and is not able to distinguish or to isolate the more challenging part of the channel between the mobile station and the relay station.

Recently, chunk-based OFDM-AF schemes were introduced that allow for significant SNR (SNR = $\underline{S}$ignal to Noise $\underline{R}$atio) gains compared to conventional OFDM relaying through reordering the received chunks at the relay station in the frequency domain, as for example discussed by Herdin Markus: "A Chunk-Based OFDM Amplify-and-Forward Relaying Scheme for 4G Mobile Radio Systems," accepted for presentation at ICC 2006, and as disclosed in European patent application 5016694.1 (Application Number), "Method for Relaying Information Received via a First Channel to a Second Channel and Relay Apparatus".

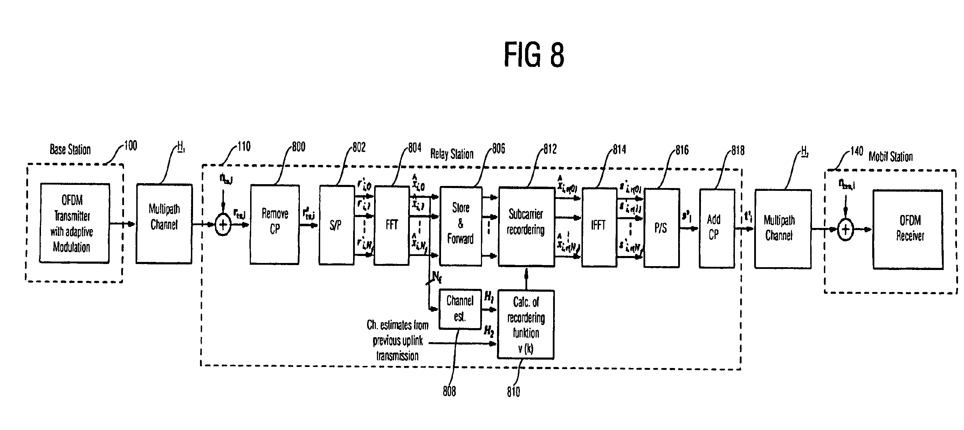

This reordering process takes the current transfer functions of the first and second hop channels into account and optimizes the coupling between them. However, channel estimation of the overall channel becomes problematic, since correlations between neighboring chunks are destroyed when they are reordered. A block diagram of an exemplary OFDM system utilizing chunk-based reordering is depicted in Fig. 8 showing a transmitter 100, e.g. a base station, that transmits a radio signal through a first multi-path channel $\underline{H_1}$ to a relay station 110. The relay station 110 forwards the received signal through a second multi-path channel $\underline{H_2}$ on to the receiver 140, e.g. a mobile station. Without loss of generality, e.g. downlink transmission is considered.

As can be seen, the relay station 110 receives a signal $r_{n,i}$ that is superimposed by additive white Gaussian noise $n_{n,i}$. At the relay station 110 a first entity in the signal processing paths removes the cyclic prefix 800 and after the cyclic prefix has been removed the signal is passed on to a serial/parallel-converter 802. The parallel converted signal is then Fast-Fourier-transformed 804 and the transformed signal is stored in a store and forward entity 806. Furthermore, pilot symbols are extracted from the Fourier-transformed signal and transferred to the channel estimator 808 in parallel. The output of the channel estimator, i.e. the estimated channel coefficients $\underline{H_1}$, are a first input into a processing entity 810 for calculation of the reordering function v(k). The second input into the processing entity 810 are the estimated channel coefficients of the second radio channel $\underline{H_2}$, which result from a channel estimation during the last inverse transmission, i.e. the last uplink transmission. Once the reordering function v(k) has been calculated 810 it is input into the reordering entity 812, which,is also connected to the output of the store and forward entity 806. Based on the stored Fourier-transformed signals and the reordering function v(k) the reordering entity 812 reorders the sub-carriers on a chunk basis and the reordered sub-carriers, respectively chunks, are input into an Inverse-Fast-Fourier-Transformation entity 814 and transformed back into the time domain. The output signal is then parallel/serial converted 816 and a cyclic prefix is added in an entity 818, which passes the amplified signal on to the second radio channel $\underline{H_2}$.

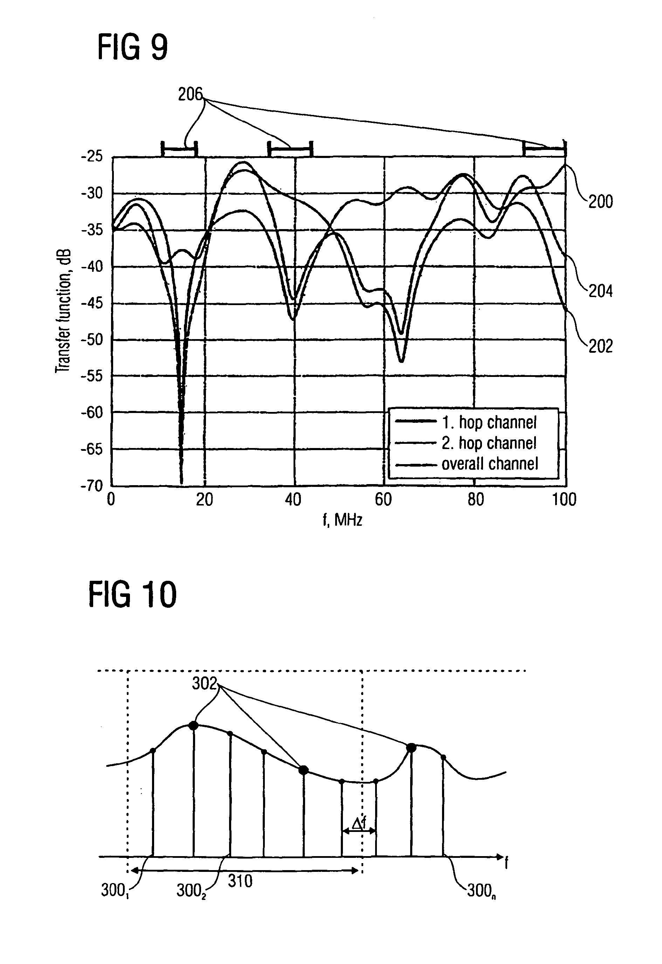

The transfer functions of the first and second multi-path channels $\underline{H_1}$, $\underline{H_2}$ as well as the transfer function of the overall channel vs. the frequency are illustrated in Fig. 9. In Fig. 9 the transfer function 200 of the first radio channel $\underline{H_1}$ in Fig. 8 between the transmitter 100 and the relay station 110 and the transfer function 202 of the second radio channel $\underline{H_2}$ in Fig. 8 between the relay station 110 and the receiver 140. The transfer function of the overall channel is shown at 204. The transfer functions are shown on logarithmic scale vs. the frequency range of 0 to 100 MHz. In addition, the three areas 206 indicate where the relay station 110 receives strong sub-carriers of the first radio channel $\underline{H_1}$ but these sub-carriers happen to be weak sub-carriers of the second radio channel $\underline{H_2}$. If the relay station 110 couples these strong sub-carriers of the first radio channel $\underline{H_1}$ into the weak sub-carriers of the second radio channel $\underline{H_2}$, this would cause degradation in the system throughput and would be sub-optimal for the system capacity. In order to prevent this degradation, reordering is done at the relay station 110. The basic idea is that the received chunks, where a chunk is a group of subcarriers, are reordered in the frequency domain such that an optimum coupling between receive and transmit chunks in the frequency domain is achieved. The chunk reordering function $v_{DL}$ (k) and $v_{UL}$ (k) for downlink and uplink, respectively, gives the second hop chunk into which the $k^{th}$ first hop chunk is coupled. For non-adaptive modulation at the base station, it can be shown that an optimum coupling is given when the chunks are sorted according to the SNR such that the first hop chunk with the highest SNR is coupled into the second hop chunk with the highest SNR, the first hop chunk with the second highest SNR into the second hop chunk with the second highest SNR, etc.

For non-adaptive modulation a gain in the order of 1-2dB can be obtained. In case of adaptive modulation, simulations show that gains could even be higher. While reordering at the relay station provides certain benefits to the SNR, it also causes a problem to the channel estimation. OFDM channel estimation is based on a grid of pilot symbols. Fig. 10 shows a schematic spectrum of an OFDM signal. Fig. 10 depicts how the different sub-carriers $300_1$ to $300_n$ are equidistantly placed in the frequency domain. The subcarrier spacing is termed $\Delta f$, and pilot symbols 302 are inserted into the sub-carrier grid at every third subcarrier. This is indicated by the bold lines with large dots in Fig. 10. Moreover, Fig. 10 shows the chunk bandwidth 310. Reordering at a relay station happens on a chunk basis, i.e. chunks that have

EP 1 850 509 B1

been neighbored when they were transmitted by the transmitter are not neighbored any more when they are transmitted by the relay station. This causes a problem and a major disadvantage for the channel estimation. The channel estimation algorithm can no longer interpolate between channel estimates of neighbored chunks as they are received at the receiver, since they may not have been neighboring chunks during the transmission from the transmitter to the relay station. If the channel estimation algorithm disregards the changed order as it would in a system without reordering at a relay station, wave form discontinuities result in the estimated overall radio channel.

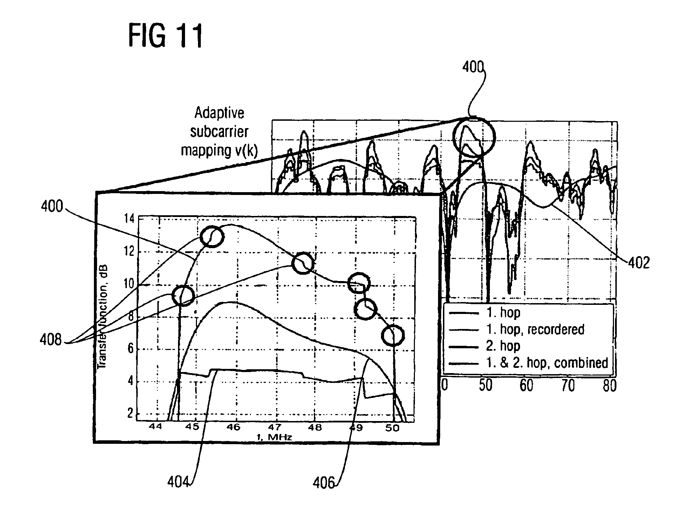

Fig. 11 illustrates this effect showing an estimated transfer function 400 at the receiver 140 of an OFDM radio channel, wherein the signal has passed the relay station 110 that carried out chunk-based reordering. Also the transfer function 402 for the first channel $\underline{H}_1$, the transfer function 404 for the reordered first channel, and the transfer function 406 for the second channel $\underline{H}_2$ are shown. As can be seen from the transfer function 400, due to the reordering, discontinuities and phase jumps are introduced. The circles 408 in the magnified viewgraph indicate such discontinuities and the resulting phase jumps. These discontinuities and phase jumps cause a degradation in the channel estimation performance and yield a degradation in the SNR of the signal, which again translates into a loss of link and system capacity.

It becomes obvious that the transfer function 406 of the second hop channel $\underline{H}_2$ is somehow approximated due to the reordering process. However, the overall transfer function 400 is no longer smooth but has the plurality of discontinuities. In particular, the correlation in the phase is destroyed. Whereas the correlation and phase could easily be recovered by setting the phases of all sub-carriers to zero at the relay station, this is not possible for the amplitudes. The discontinuities in the transfer function lead to a widely spread power delay profile, which causes severe problems in channel estimation.

In US 2005/0014464 A1 a method for communicating in wireless networks using relaying is described. In the method of performing communication in a two-hop wireless communication network, a transmitter, a receiver and at least one relay station are engaged in a communication session. The relay station forwards signals from a first link between the transmitter and the relay station to a second link between the relay station and the receiver. The forwarding performed by the at least one relay station is adapted as a response to estimated radio channel characteristics of at least the first link. Preferably the forwarding is adapted as a response to estimated radio channel characteristics of both the first and the second link. The methods describe power adaptation schemes at the relay station, in order to optimize the power assignment on the channel between the relay station and the receiver. However, reordering is not considered and it is assumed that channel estimation works properly. Therefore the method described has the disadvantage, that the pilot symbol scheme is not considered in the relaying scenario. As it is assumed that channel estimation works properly, the proposed method has a high pilot overhead, since the pilot pattern has to be matched to the worst case scenarios.

In EP 1564911 A1 a radio relay system is disclosed that is capable of preventing communication degradation in a case where radio signals are relayed using the same frequency band in a mobile communication environment. The radio relay system includes a first radio station, a second radio station, and a radio relay apparatus for relaying a radio signal that is exchanged between the first radio station and the second radio station. The radio relay apparatus includes a phase correction determining unit that determines a phase correction amount of the relayed signal based on channel information pertaining to channels established between the first radio station, the second radio station, the radio relay apparatus, and a phase correction unit that corrects the relayed signal based on the phase correction amount determined by the phase correction determining unit. The method proposed has the disadvantage that the pilot scheme utilized has a large overhead. Pilot symbols are transmitted from the transmitter to the relay station, from the transmitter to the receiver and from the relay station to the receiver. For each set of pilot symbols extra transmission resources are dedicated resulting in a disadvantageous pilot overhead.

While specific problems in estimating the overall channel of a multihop network due to the above reordering scheme were discussed, it is noted that a reliable estimation of the overall channel between the transmitter and the receiver in a multihop network using relay stations might not be reliable due to strong variations in the second channel connecting the relay station and the receiver, e.g. a mobile station.

It is the object of the present invention to provide a method, a relay station and a receiver providing for improved channel estimation in multihop networks using reordering for signals comprising a plurality of signal blocks.

This object is achieved by a method of claim 1, by a relay station according to claim 12, and by a receiver according to claim 19.

Also, the present invention provides a wireless communication system using the inventive approach.

The present invention provides a method for radio channel estimation in a wireless communication system, the wireless communication system comprising a relay station for relaying signals between a transmitter and a receiver, the signals comprising a plurality of signal blocks, the radio channel between the transmitter and the receiver comprising a first radio channel between the transmitter and the relay station and a second radio channel between the relay station and the receiver, the relay station being adapted for reordering the signal blocks of the signal according to a reordering scheme, the method comprising a step of estimating the radio channel between transmitter and receiver, based on an estimation of the first radio channel and an estimation of the second radio channel, wherein the estimation of the first

4

radio channel is based on pilot symbols provided by the transmitter, and the estimation of the second radio channel is based on pilot symbols inserted by the relay station, the relay station being adapted for inserting the pilot symbols based on the reordering scheme.

Also, the present invention provides a relay station in a wireless communication system for relaying a signal comprising a plurality of signal blocks received on a first radio channel to a second radio channel, wherein the plurality of signal blocks received on the first radio channel is provided by a transmitter and includes pilot symbols, and the relay station being adapted for reordering the plurality of signal blocks according to a reordering scheme with a pilot insertion unit for providing new pilot symbols for at least one of the plurality of signal blocks received on the first radio channel according to a pilot provision scheme, wherein the relay station is further configured for transmitting the plurality of signal blocks including the new pilot symbols and the plurality of signal blocks including the pilot symbols provided by the transmitter on to the second radio channel, the relay station characterized in that the pilot provision scheme is based on the reordering scheme.

Moreover, the present invention provides a receiver in a wireless communication system for receiving a signal comprising a plurality of signal blocks over a radio channel from a transmitter via a relay station, the radio channel comprising a first radio channel between the transmitter and the relay station and a second radio channel between the relay station and the receiver, wherein the plurality of signal blocks includes at least one pilot symbol, the at least one pilot symbol being provided either by the relay station or the transmitter, the receiver comprising a signal processing unit being adapted for receiving the plurality of signal blocks from the radio channel and for estimating the radio channel between the transmitter and the receiver based on an estimation of the first radio channel and an estimation of the second radio channel, wherein the estimation of the first radio channel is based on pilot symbols inserted by the transmitter, and the estimation of the second radio channel is based on pilot symbols inserted by the relay station according to a pilot provision scheme and the relay station being adapted for reordering the plurality of signal blocks received from the transmitter according to a reordering scheme, characterized in that the receiver being adapted for de-reordering the plurality of signal blocks according to an inverse reordering scheme and the pilot provision scheme being based on the reordering scheme.

In accordance with the present invention, a novel concept for channel estimation in a multihop network is provided taking into account the higher variance of the second channel between a relay station in a wireless communication network and a receiver, e.g. a mobile station, when compared to the variance in the first channel connecting a transmitter, e.g. a base station, and the relay station. The present invention provides a pilot and channel estimation scheme that allows for efficient channel estimation in a wireless communication system. In accordance with the present invention, a new pilot grid is inserted at a relay station of the wireless communication system in addition to the existing pilot grid in the receive signal from a transmitter or a preceding relay station, in order to avoid channel estimation problems that stem from the different properties of the channels. Preferably, the temporal pilot spacing will be adapted, separately, to the first and second hop channels, which will likely differ strongly in temporal variance. At the receiver, e.g. the mobile station, the channel estimation is performed in two steps, wherein the second and first hop channels are estimated separately. Thus, while the inventive approach still uses pilot symbols introduced by the transmitter into the signals in a conventional manner, the inventive approach no longer merely relies on such pilots but replaces at least one or more of these "original" pilot symbols (introduced by the transmitter) by new pilot symbols at the relay station. The receiver estimates the second channel on the basis of the "new" pilot symbols (introduced by the relay station) and the first channel on the basis of the original pilot symbols, separately. The new pilot symbols introduced by the relay station can be any desired sequence of symbols known by the receiver. On the basis of the separate estimations, the overall channel will be estimated. Alternatively, other schemes for introducing the new pilot symbols at the relay station can be used.

The transmitter can be adapted to provide the signals such that only a reduced number of pilot symbols is introduced into the signal provided by the transmitter, i.e. only the pilot symbols which are used for estimating the first channel. The remaining pilot symbols which would also be provided in a conventional approach are omitted, thereby creating empty positions in the signal provided by the transmitter and received at the relay station. Instead of replacing the original pilot symbols, the relay station now simply introduces the new pilot signals into the received signal at the empty positions.

In accordance with another embodiment, the signal provided by the transmitter, again, includes only a reduced number of pilot symbols, i.e. only the pilot symbols which are used for estimating the first channel. In addition, the signal includes further information only required by the relay station. This further information is not needed at the receiver and, therefore, needs not to be forwarded by the relay station towards the receiver. In this situation, the relay station will replace the symbols associated with the further information in the signal received from the transmitter by the new pilot symbols.

In yet another embodiment, the signal provided by the transmitter, again, includes only a reduced number of pilot symbols, i.e. only the pilot symbols which are used for estimating the first channel, and the relay station is adapted to apply a predetermined puncturing scheme to the signal received from the transmitter, thereby removing data symbols from this signal. The relay station is further adapted to replace the removed data symbols by the new pilot symbols. At the receiver, after obtaining the pilot symbols from the signal received from the relay station, an appropriate de-puncturing scheme is applied to the signal to recover the data symbols. Preferably, the puncturing rate at the relay station should not exceed 5% to 10%.

In accordance with the present invention a complete radio channel in a multihop network can be estimated more accurately when estimating the first and second channels separately. The relay station introduces the "new" pilot symbols into the signal received through the first radio channel from the transmitter, and the receiver will estimate the second part of the radio channel between the relay station and the receiver, and based on this estimation the receiver will estimate the overall radio channel based on the pilot symbols the transmitter has inserted into the signal that is forwarded by the relay station, when the relay station does not replace the pilot symbols from the transmitter.

While, in general, the present invention is applicable to multihop networks using relay station, in accordance with a preferred embodiment, the inventive pilot and channel estimation scheme is used for an approach in accordance with which the correlation between signal blocks (e.g. chunks) in the signal received at the relay station is cancelled by the relay station prior to forwarding the signal towards the receiver. One example for such an approach is the adaptive OFDM amplify-and-forward with chunk-based sub-carrier or sub-channel reordering at the relay station. The basic idea is to insert the new pilot grid into each relayed OFDM packet such that the mobile station can estimate the first and second hop channels separately. This avoids the problem of having decorrelated pilot symbols at the mobile station when chunk-based sub-carrier reordering is used at the relay station. The inventive scheme shows that the gains for the considered adaptive OFDM AF relaying scheme can still be preserved if the channel estimation is taken into account. For non-adaptive modulation this gain is in the order of 1dB and for adaptive modulation up to 3dB. The additional overhead due to the pilots inserted at the relay station and also the increase in signal processing power necessary at the mobile station can be kept small when taking the different channel variability of the first and second hop channels into account.

In accordance with the above described preferred embodiment in which the correlation between signal blocks in the signal received at the relay station is cancelled by the relay station prior to forwarding the signal towards the receiver, the present invention is especially advantageous in that a significant SNR gain can be obtained over conventional channel estimation and multi-hop networks, which directly translates into higher link capacity and system capacity.

In accordance with a preferred embodiment in accordance with which the first radio channel and the second radio channel have a plurality of sub-channels and the signals from sub-channels of the first radio channel are mapped to sub-channels of the second radio channel in accordance with a predetermined scheme at the relay station the signal processing unit of the receiver is adapted to estimate the second channel on the basis of the pilot symbols provided by the relay station, to demap the estimated channel from the relay station by performing an inverse mapping operation, to estimate the signal transmitted from the relay station to the receiver, to estimate the first channel on the basis of the associated pilot symbols in the estimated signal, and to estimate the radio channel on the basis of the estimated fist and second channels.

Preferred embodiments of the present invention will be described below with respect to the accompanying drawings, in which

Fig. 1      shows a schematic block diagram of a multihop network in accordance with the present invention;

Fig. 2      shows a block diagram of a preferred embodiment of the present invention;

Fig. 3      shows a block diagram of a further preferred embodiment of the present invention using the inventive frequency chunk scheduling relay for the case of a downlink transmission;

Fig. 4      shows a table of k factors and delays used for the simulations;

Fig. 5      shows the achieved BER (BER = Bit Error Ratio) for a conventional ORFM relaying (unordered) and chunk based reordered OFDM relaying (Chunk) with pilot grid insertion at the relay station; the results are given for UNI and UNIPM channel estimation and for non-adaptive (NoAM) and adaptive (AM) modulationsimulation results;

Fig. 6      shows the achieved MSE (MSE = Mean Square Error) channel estimation error for conventional ORFM relaying (unordered) and chunk based reordered OFDM relaying (Chunk) with pilot grid insertion at the relay station; the results are given for UNI and UNIPM channel estimation and for non-adaptive (NoAM) and adaptive (AM) modulation;

Fig. 7      shows a conventional multi-hop network;

Fig. 8       shows a block diagram of a conventional OFDM multi-hop system with chunk-wise reordering;

Fig. 9       shows a diagram with an exemplary channel transfer function of a first radio channel between a transmitter and a relay station and a second radio channel between the relay station and a receiver;

Fig. 10      shows an exemplary pilot grid in an OFDM system of Fig. 8; and

Fig. 11      shows a diagram of the transfer function of the first and second hop channels and resulting transfer function for chunk reordering at the relay station as shown in Fig. 8 indicating discontinuities and phase jumps caused by chunk-based reordering at a relay station.

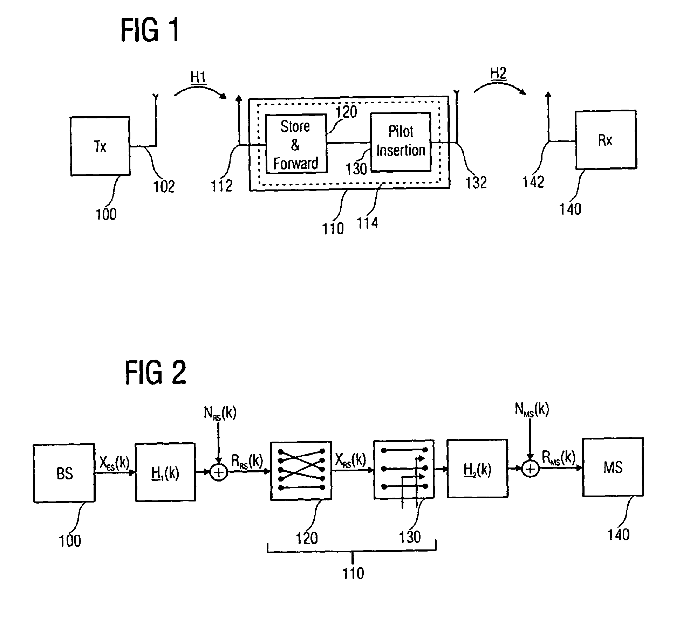

Fig. 1 shows an embodiment of the inventive network. Like the conventional network described with regard to Fig. 7 above, also the inventive network comprises the transmitter 100 generating the signals comprising pilot symbols to be transmitted on the first radio channel $\underline{H}_1$ to the relay station 110. The transmitter 100 is a conventional transmitter receiving the signals to be transmitted and preparing the signals for transmission over an antenna 102, e.g. by introducing pilot symbols. The relay station 110 receives the signal transmitted by the transmitter 100 via an antenna 112 from the first channel $\underline{H}_1$. The received signal is input into a signal processing unit 114 of the relay station 110. The signal processing unit 114 comprises a store-and-forward unit 120 and a pilot insertion unit 130. In the pilot insertion unit 130 pilot symbols are introduced into the signal received from the .transmitter 100. The signal processed by the signal processing unit 114 is output to an antenna 132 and sent over the second channel $\underline{H}_2$ to the receiver 140 receiving the signal via an antenna 142. The receiver 140 estimates the second channel $\underline{H}_2$ between the relay station 110 and the receiver 140 based on the "new" pilot symbols inserted by the relay station 110. Once the second channel $\underline{H}_2$ was estimated by the receiver 140, the receiver 140 can proceed estimating the overall radio channel formed by the first channel $H_1$ between the transmitter 100 and the relay station 110 and the second channel $H_2$ between the relay station 110 and the receiver 140. The channel estimation is based on a pilot insertion scheme that is known to the relay station 110 and to the receiver 140. Whenever the relay station inserts or replaces pilot symbols in the signal it has received from the transmitter 100, the receiver 140 estimates the radio channel $\underline{H}_2$. The pilot symbol insertion or replacement at the relay station 110 can be done in a prearranged scheme, for example 9 out of 10 times, or it could be based on a signaling scheme between the receiver 140 and the relay station 110, or the like.

Fig. 2 is a block diagram of a preferred embodiment of the present invention. In accordance with this preferred embodiment the inventive approach is applied to an adaptive OFDM amplify-and-forward with chunk-based sub-carrier or sub-channel reordering at the relay station. Fig. 2 shows schematically the relay station 110 comprising the store-and-forward unit 120 and the pilot insertion unit 130. The transmitter already mentioned in Fig. 1 is formed by a base station 100 providing signals $X_{BS}(K)$ including pilot symbols. The signals $X_{BS}(k)$ are transmitted over the first channel $H_1$ to the relay station 110. The store-and-forward unit 120 receives a signal $R_{RS}(k)$, is provided for subcarrier (sub-channel) mapping and for outputting a signal $X_{RS}(K)$. The pilot insertion unit 130 receives the signal $X_{RS}(K)$ and is provided for introducing new pilot symbols into the received signals $X_{RS}(K)$ as will be discussed in further detail below. Over the second hop channel $H_2$ the signal output by the relay station 110 is transmitted towards the receiver 140.

As the signal $X_{BS}(k)$ propagates through the first hop channel $\underline{H}_1$, same is subjected to noise, and is superimposed by additive white Gaussian noise $N_{RS}(k)$ resulting in the signal $R_{RS}(k)$ received at the relay station (RS) 110. At the relay station 110 the adaptive sub-carrier mapping is carried out, while the signal is stored and forwarded. Before the reordered signal $X_{RS}(k)$ is forwarded, new pilot symbols are inserted into the signal. The signal is then forwarded via the second hop channel $\underline{H}_2$ to the mobile station (MS) 140. The signal received at the mobile station $R_{MS}(k)$ is again subjected to noise and is superimposed by additive white Gaussian noise $N_{MS}(k)$. The mobile station 140 will estimate the second hop channel $\underline{H}_2$ based on the "new" pilot symbols inserted by the relay station 110. The first hop channel $\underline{H}_1$ will be estimated from the pilot symbols that were included into the signal by the base station 100 but were not replaced by the relay station 110.

The relay station 110 inserts new pilot symbols, so that the signals received at the mobile station 140 will contain pilot symbols that were inserted by the relay station and pilot symbols that were inserted by the base station 100. The mobile station 140 will then estimate the second hop channel $\underline{H}_2$ as well as the first hop channel $\underline{H}_1$ and the overall radio channel at any time. The relay station 110 either replaces the base station pilot grid N of (N+1) times or allows transmissions of base station pilot symbols only each 1/N pilot intervals. In the former case, in accordance with one example, the relay station 110 replaces the "original" pilot symbols based on a fixed scheme, for example 9 out of 10 times. In this case, the mobile station 140 estimates the second hop channel $\underline{H}_2$ in 9 out of 10 times, while it estimates the first hop channel $\underline{H}_1$ and the overall radio channel every 10th time. In practice, the first hop channel $\underline{H}_1$ between the base station 100 and the relay station 110 can be assumed substantially static. The second hop channel $\underline{H}_2$ between the relay station 110 and the mobile station 140 though, is much more critical. Therefore, the above scheme allows the mobile station to estimate the critical channel $\underline{H}_2$ in 9 out of 10 times, while the static part $\underline{H}_1$ of the radio channel, will

EP 1 850 509 B1

be estimated every 10th time.

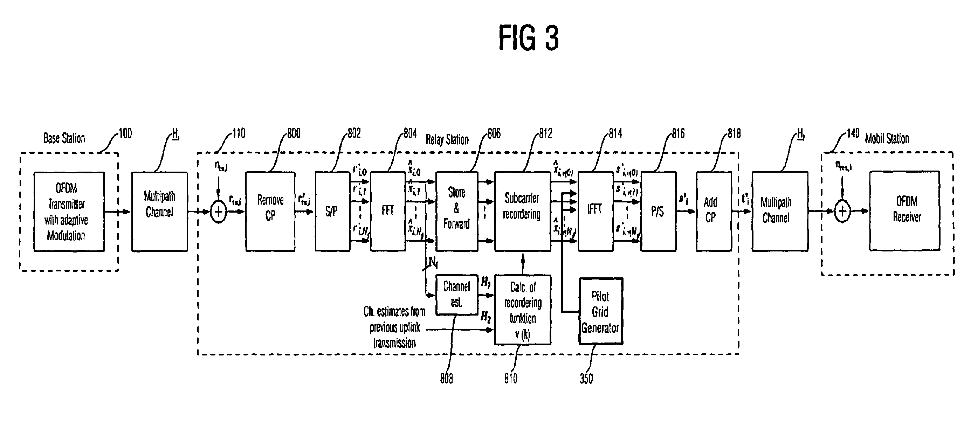

Fig. 3 is a block diagram of a further preferred embodiment of the present invention using the inventive frequency chunk scheduling relay for the case of a downlink transmission. The block diagram of Fig. 3 is similar to the one shown in Fig. 8, except that the receiver 140 has the inventive functionality of estimating the first and second channel $\underline{H}_1$, $\underline{H}_2$ separately, and except that the relay station 110 further comprises a pilot grid generator 350. The other elements shown in Fig. 3 correspond to the elements described with regard to Fig. 8 and have substantially the same functionality of frequency chunk scheduling. On the basis of the preferred embodiment shown in Fig. 3, the present invention will now be described in further detail.

The embodiment of Fig. 3 assumes an OFDM TDD (Time Division Duplex) scenario where the base station 100 communicates with the mobile station 140 using the single relay station 110. The mobile station 140 is out of reach of the base station 140, meaning that only the relay station 110 can receive and transmit from and to the base station 100 or the mobile station 140. For simplification but without loss of generality, it can be assumed that the whole bandwidth is assigned to the mobile station 140. The relay station 110 operates in an amplify-and-forward mode. In practice, this means that the communication between the base station 100 and the relay station 110 covers two time slots. For the forward link direction (downlink) the base station 100 transmits an OFDM packet during the first time slot and the relay station 110 receives and stores the signal. During the second time slot, the relay station 110 retransmits the processed version of the stored signal towards the mobile station 140. Processing does not include decoding and reencoding. For uplink transmission, the roles of base station 100 and mobile station 140 are exchanged.

In the following, the inventive approach is described with regard to the downlink direction, however, a man of ordinary skill will readily recognize that the present invention is not limited to such an implementation. The principles of the present invention can equally be applied for the uplink direction.

It is further assumed that the maximum delay of the channel is below the length of the cyclic prefix and that the radio channel remains constant during the transmission of one OFDM symbol, considering a single subcarrier k, the system model can be written as:

$$Y_k = H_{2,k}gH_{1,v(k)}X_{v(k)} + H_{2,k}gN_{1,v(k)} + N_{2,k}$$

wherein:

- $Y_k$ is the received signal,
- $H_{2,k}$ is the second hop channel coefficient,
- g is the gain coefficient by which the signal is amplified at the relay station 110,
- $H_{1,v(k)}$ is the first hop channel coefficient,
- $X_{v(k)}$ is the transmit symbol,
- $N_{1,v(k)}$ is the received noise at the relay station 110, and
- $N_{2,k}$ is the received noise at the destination.

For the downlink transmission

- $H_{1,k}$ is the BS-to-RS channel $\underline{H}_1$ (base station to relay station channel),
- $H_{2,k}$ is RS-to-MS channel $\underline{H}_2$ (relay station to mobile station channel), and
- $N_{2,k}$ is the received noise at the mobile station and $v(k) = v_{DL(k)}$.

For the uplink transmission

- $H_{1,k}$ is the MS-to-RS channel $\underline{H}_2$ (relay station to mobile station channel),
- $H_{2,k}$ is the RS-to-BS channel $\underline{H}_2$ (base station to relay station channel), and
- $N_{2,k}$ the received noise at the base station and $v(k) = V_{UL(k)}$.

The noise power density is assumed to be constant over all subcarriers and the total received noise power is given by $\sigma^2_{n,1}$ and $\sigma^2_{n,2}$ for the relay station 110 and the destination (base station 100 or mobile station 140). Furthermore, it is assumed that the total transmit power of the base station $P_{t,BS}$ is distributed equally over the $N_{f,used}$ subcarriers. In order to not exceed the maximum transmit power $P_{t,RS}$ of the relay station 110, the relay station 110 has to choose the gain coefficient g such that

$$\frac{g^2}{P_{t,rs}}\left(\sum_{k=1}^{N_{f,used}}\left|H_{1,k}\right|^2\frac{P_t}{N_{f,used}}+\sigma_{n,1}^2\right)=1$$

is fulfilled. As described above, an essential problem due to reordering is that the correlation between neighboring chunks of the overall channel is destroyed. Due to the reordering, the transfer function is no longer smooth but has a number of discontinuities. In particular, the correlation in the phase is destroyed and jumps in the transfer function's amplitude occur as indicated in Fig. 11. The discontinuities in the transfer function lead to a widely spread power delay profile, which causes severe problems in channel estimation.

This problem is solved by inserting a new pilot grid into the OFDM packet at the relay station 110 after the reordering process. This allows the mobile station 140 to estimate the second hop channel $H_{2,k}$ without facing the problem of decorrelated pilot symbols. Also the transmit signal at the relay station,

$$\hat{R}_k=\frac{H_{2,k}}{\hat{H}_{2,k}}gH_{1,v(k)}X(k)+gN_{1,v(k)}+\frac{N_{2,k}}{\hat{H}_{2,k}},$$

can be estimated at the mobile station 100.

The back-ordered transmit signal at the relay station $\hat{R}_{v-1(k)}$ is then used to estimate the first hop channel $\hat{H}_{1,k}$ and the overall estimated transfer function is then given by

$$\hat{H}_{eff,k}=\hat{H}_{1,k}\hat{H}_{2,k}$$

As mentioned above, the pilot insertion operation can be performed in different ways. An efficient scheme would be to simply replace the pilot symbols that were transmitted by the base station during N out of (N+1) times by a new pilot grid, at the relay station. This allows the mobile station to estimate the second hop radio channel at a high rate, while still allowing to estimate the first hop radio channel, and thereby the overall channel. For infrastructure relay stations, the first hop radio channel will usually show a low temporal variability, which allows for a rather low rate channel estimation cycle. The second hop radio channel however, will usually show a rather high temporal variability, for which the inventive scheme allows a high rate channel estimation cycle.

A further advantage of the inventive pilot insertion scheme is a low additional overhead. Only a factor of (N+1)/N additional pilot symbols are necessary and the additionally required processing power at the mobile station would only increase by the same factor.

In the following, the benefits of the present invention are demonstrated by system level simulations and their results. The system parameters, which are considered in this paper are based on the current IST-WINNER (www.IST-winner.org) parameters for the short-range TDD mode. The sender, frequency is 5 GHz. The system bandwidth is 100 MHz with 2048 subcarriers, where $N_f$ = 1664 are in use. This means that the actual signal bandwidth is 81.25 MHz. The OFDM symbol length is 20.48 $\mu$s and the subcarrier spacing is 48828 Hz. A cyclic prefix of 1.28 $\mu$s is used, in the system, and since it is assumed that the maximum channel delay is below the cyclic prefix length, and it is further assumed that the channel is constant for the duration of one OFDM symbol, the simulation is done in the frequency domain. Channel estimation is performed using a Wiener filter, which is designed based on a uniform power delay profile assumption with a given maximum delay. For channel estimation at the relay station, it is assumed that a maximum delay of the base station to the relay station channel is known, and at the mobile stations the length of the guard interval, i.e. the cyclic prefix length, is used as maximum delay for the filter design. A chunk size of 16 sub-carriers is used. Adaptive modulation is performed on a chunk basis. Allocation of resources is chunk based, where a single chunk consists of 16 subcarriers and 5 OFDM symbols in time, i.e. a total of 80 OFDM symbols.

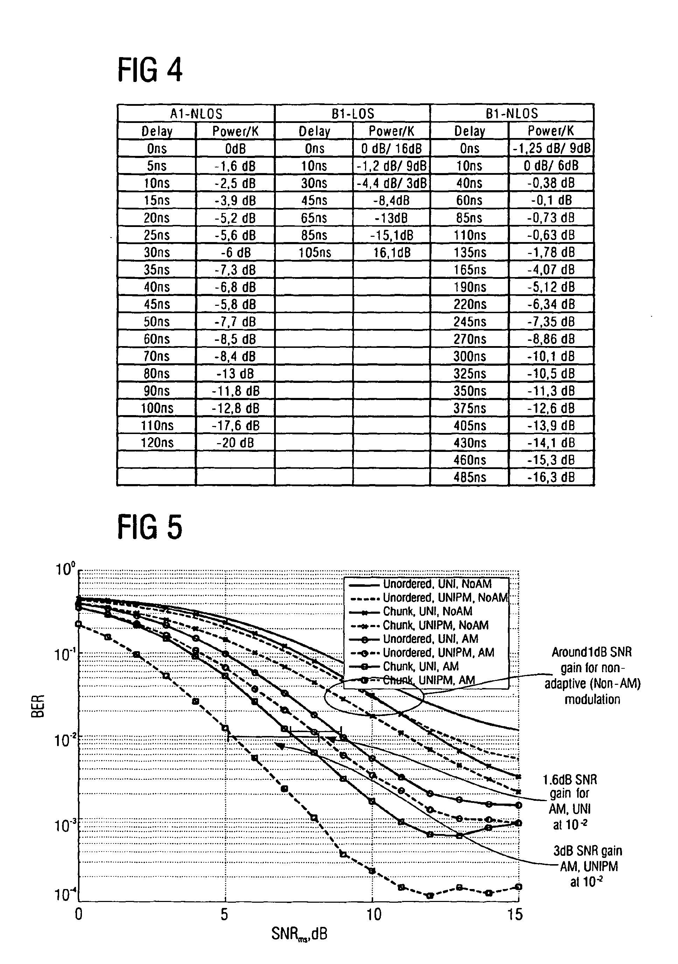

An outdoor micro cellular scenario is considered, where the mobile station is out of reach of the base station. This means it can only receive signals from the relay station. Only the downlink case is considered here. A simple tapped delay line model with Rice (line of sight) or Rayleigh (non-line of sight) fading taps is used for simulation of the frequency selective channel. It is assumed that the transfer functions are constant for the duration of one OFDM symbol and fade uncorrelated from symbol to symbol. The power delay profiles are based on the WINNER BI-LOS (Line Of Sight) and B1-MLOS (Non-LOS) interim channel models (as they can be found in IST-1003-507581, WINNER D5.4 ver 1.00 - final report on link level and system level channel models, www.IST-winner.org). The power delay profiles and the k factors for each tap are given in the table in Fig. 4.

For chunk-based reordering relaying, the received pilot grid is replaced at the relay station with a new pilot grid. Only each $N^{th}$ time, the pilot grid is not replaced, which allows the mobile station t,o estimate the first hop radio channel. It is assumed that N is matched to the different variabilities of the base station to relay station and the relay station to mobile station radio channels. This means that additional overhead due to inserted new pilot symbols is not considered at the relay station. A pilot spacing in the frequency direction of $\Delta f = 4$ is used.

Furthermore, it is assumed that one OFDM symbol contains 2496 code bits. Adaptive modulation is considered according to Robert F.H. Fischer; and Johannes B. Huber: "A new loading algorithm for discrete multi tone transmission," in Proceedings of the Global Telecommunications Conference, November 1996, vol. 1, pages 724-728, at the base station based on knowledge of the instantaneous chunk SNR. The possible modulation formats are limited to QPSK, 16 QAM and 64 QAM. Note for adaptive modulation, not all subcarriers are used. This means that the power is equally distributed among the used subcarriers, which gives an SNR gain at the relay station and the mobile station.

Convolutional coding with generators, rate 1/2, memory 4 and random interleaving is applied to each OFDM symbol with the frame length equal to the OFDM packet length. The code is terminated, which means that the number of information bits transmitted equals to 1/2 of the number of code bits minus the memory length. At the receiver, the log-likelihood ratios are calculated for each code bit and a Viterbi-decoder is used to decode the OFDM packets.

The average receive SNR at the relay station is fixed to 10dB for the case of non-adaptive modulation at the base station. In the case of adaptive modulation, as it is considered here, the actual receive SNR at the relay station becomes higher because the transmit power can be distributed to fewer strong subcarriers. The SNR at the mobile station is varied from 0-15dB, assuming non-adaptive modulation with equal power per subcarrier. For adaptive modulation, the transmit power per subcarrier depends on the first hop channel and on the number of subcarriers used for transmission. Since the total transmit power of the relay station is constant, the receive power and therefore the average receive SNR.at the mobile station will be generally higher. The relay station retransmits all subcarriers, regardless whether they contain a signal or not. Restricting retransmission to those subcarriers that are actually carrying a signal would only give a minor SNR improvement at a mobile station since the receive noise power and the sub-carriers is only very small.

In the following, conventional OFDM-AF with chunk reordering OFDM-AF when taking channel estimation into account is compared.

Fig. 5 shows the achieved BER (BER = Bit Error Ratio) for a conventional ORFM relaying (unordered) and chunk based reordered OFDM relaying (Chunk) with pilot grid insertion at the relay station; the results are given for UNI (UNI = uniformly) and UNIPM (UNIPM = uniformly perfectly matched (with respect to the maximum channel delay)) channel estimation and for non-adaptive (NoAM) and adaptive (AM) modulationsimulation results. The solid lines correspond to UNI and the dashed lines to UNIPM channel estimation. Channel estimation is based on the minimum mean square error (MMSE) criterion. In order to determine the Wiener filter, knowledge about the channel statistics is required. Here, the worst-case scenario is assumed, i.e. maximum expected channel delays and a uniform power delay profile. In case of UNI channel estimation, a maximum channel delay of the worst case is assumed, i.e. a maximum channel delay that is equal to the cyclic prefix length. For the UNIPM channel estimation, the assumed channel delay is adapted to the actual maximum channel delay as given by the channel model. In Fig. 5, the lines without a marker and with marker "o" depict the results of conventional OFDM-AF without chunk reordering and the lines with marker "x" and square marker depict the results for chunk-based reordering with pilot grid insertion at the relay station. For non-adaptive modulation (no marker and marker "x"), a gain of 1dB can be obtained when reordering the chunks with pilot grid insertion at the relay station compared to conventional OFDM-AF. For adaptive modulation (marker "o" and square marker), the gain increases to 1.6dB for UNI channel estimation and 3dB for UNIPM channel estimation. Additionally, it can be seen that the BER floor, which results from the noise at the relay station, is significantly decreased due to the SNR gain that already appears at the relay station.

Fig. 6 shows the achieved MSE (MSE = Mean Square Error) channel estimation error for conventional ORFM relaying (unordered) and chunk based reordered OFDM relaying (Chunk) with pilot grid insertion at the relay station; the results are given for UNI and UNIPM channel estimation and for non-adaptive (NoAM) and adaptive (AM) modulation. It can be seen that there is always a clear and nearly constant gain when comparing the results for non-adaptive modulation with the results for adaptive modulation (AM). The reason is that with adaptive modulation, the power is distributed to only the strong subcarriers, which give a higher receive power at the relay and mobile station and therefore a lower channel estimation error. If UNI and UNIPM channel estimation methods are compared, a large gain for the case of UNIPM can be seen. This is because UNIPM adapts the channel estimation filter to the length of the channel impulse response while the UNI approach only uses the maximum assumed channel delay, which equals the length of the cyclic prefix.

The advantage of the present invention, which clearly shows in the simulation results is that static gains for the considered adaptive OFDM-AF relaying scheme can be preserved if the channel estimation is taken into account. For non-adaptive modulation gains in the ,order of 1dB and for adaptive modulation up to 3dB can be achieved. The additional overhead due to the pilot symbols inserted at a relay station and also the increase in signal processing power necessary at a mobile station can be kept small when taking the different channel variabilities of the first and second hop channels into account.

Although the preferred embodiment was described with regard to the frequency chunk scheduling relay for the case of a downlink transmission, it is noted that the present invention is not limited to this implementation. As discussed above, the inventive approach, in general, is applicable for channel estimation in all wireless multihop communication networks, chunk based or nor, with or without chunk reordering.

**Claims**

1. A method for radio channel estimation in a wireless Orthogonal Frequency Division Multiplexing, OFDM, communication system, the method comprising a step of relaying an OFDM signal at a relay station (110) between a transmitter (100) and a receiver (140) of the wireless communication system, the OFDM signal comprising a plurality of chunks, where a chunk is a group of sub-carriers, the radio channel between the transmitter (100) and the receiver (140) comprising a first radio channel ($H_1$) between the transmitter (100) and the relay station (110) and a second radio channel ($H_2$) between the relay station (110) and the receiver (140), the method comprising a step of reordering the chunks of the OFDM signal according to a reordering function at the relay station (110), the method comprising:

   estimating the radio channel between the transmitter (100) and the receiver (140), based on an estimation of the first radio channel ($H_1$) and an estimation of the second radio channel ($H_2$),
   wherein the estimation of the first radio channel ($H_1$) is based on pilot symbols provided by the transmitter (100), and the estimation of the second radio channel ($H_2$) is based on pilot symbols inserted into the OFDM signal by the relay station (110), the relay station (110) being adapted for inserting the pilot symbols into the OFDM signal after the reordering.

2. The method of claim 1, comprising a step of inserting pilot symbols at the transmitter (100) according to a first rate and inserting pilot symbols at the relay station (110) according to a second rate, the first and second rates being adapted to a temporal variability of the first radio channel ($H_1$) and the second radio channel ($H_2$).

3. The method of claim 1 or 2, wherein the step of estimating the radio channel between transmitter (100) and receiver (140) comprises:

   estimating the signal transmitted from the relay station (110) to the receiver (140);
   estimating the first channel ($H_1$) on the basis of the associated pilot symbols in the estimated signal.

4. The method of claim 2 or 3, further comprising the following steps:

   (a) transmitting the plurality of chunks on the first radio channel ($H_1$) between the transmitter (100) and the relay station (110), each chunk comprising at least one pilot symbol;
   (b) receiving the plurality of chunks at the relay station (110);
   (c) inserting new pilot symbols in at least one of the received chunks according to the second rate;
   (d) transmitting the plurality of chunks on the second radio channel ($H_2$) between the relay station (110) and the receiver (140);
   (e) receiving the plurality of chunks at the receiver (140),
   the first and second rates being adapted to the temporal variability of the first radio channel ($H_1$) and the second radio channel ($H_2$).

5. The method of claim 4, wherein step (a) comprises transmitting N+1 chunks, where $N \geq 2$, and step (c) comprises inserting the pilot symbols in N received chunks.

6. The method of one of the claims 1 to 5, wherein the signal provided by the transmitter (100) comprises chunks being correlated with each other, and wherein the relay station (110) causes a cancellation of the correlation between the chunks by the reordering of the chunks, and wherein inserting the pilot symbols at the relay station (110) is further adapted to the reordering of the chunks.

7. The method of one of the claims 1 to 6, wherein the chunks of the first radio channel ($H_1$) are ranked according to their transmission quality, and the chunks of the second radio channel ($H_2$) are ranked according to their transmission quality, the reordering function associating chunks with corresponding ranks with each other.

**8.** The method of one of the claims 3 to 7, wherein the step of estimating the signal transmitted from the relay station (110) to the receiver (140) comprises performing an inverse reordering operation.

**9.** The method of one of the claims 1 to 8, wherein the wireless OFDM communication system comprises at least one further relay station relaying an OFDM signal from the relay station (110) to the receiver (140), wherein step (d) comprises

transmitting the plurality of chunks over the second radio channel ($\underline{H}_2$) between the relay station (110) and the further relay station;

receiving the plurality of chunks at the further relay station;

inserting pilot symbols into at least one of the received chunks;

transmitting of the plurality of chunks over a third radio channel between the further relay station and the receiver (140); and

wherein the step of estimating the radio channel between the transmitter (100) and the receiver (140) is based on an estimation of the first radio channel ($\underline{H}_1$), an estimation of the second radio channel ($\underline{H}_2$), and an estimation of the third radio channel,

wherein the estimation of the first radio channel ($\underline{H}_1$) is based on the pilot symbols provided by the transmitter (100), the estimation of the second radio channel ($\underline{H}_2$) is based on the pilot symbols provided by the relay station (110) and the estimation of the third radio channel is based on the pilot symbols provided by the further relay station.

**10.** A relay station (110) in a wireless Orthogonal Frequency Division Multiplexing, OFDM, communication system for relaying an OFDM signal received on a first radio channel ($\underline{H}_1$) to a second radio channel ($\underline{H}_2$), the OFDM signal comprising a plurality of chunks, where a chunk is a group of sub-carriers, the OFDM signal received on the first radio channel ($\underline{H}_1$) being provided by a transmitter (100) and including pilot symbols, and the relay station (110) being adapted for reordering the chunks according to a reordering function, the relay station (110) comprising

a pilot insertion unit (130) for providing pilot symbols for at least one chunk of the OFDM signal received on the first radio channel ($\underline{H}_1$) according to a pilot insertion scheme after the reordering, wherein the relay station (110) is further configured for transmitting the OFDM signal including the pilot symbols and the OFDM signal including the pilot symbols provided by the transmitter (100) on to the second radio channel ($\underline{H}_2$).

**11.** The relay station (110) of claim 10, wherein the plurality of chunks received on the first radio channel ($\underline{H}_1$) includes pilot symbols according to a first rate, and the pilot insertion unit (130) is adapted for inserting pilot symbols for at least one of the plurality of chunks received on the first radio channel ($\underline{H}_1$) according to a second rate, the first and second rates being adapted to a temporal variability of the first radio channel ($\underline{H}_1$) and the second radio channel ($\underline{H}_2$).

**12.** The relay station (110) of claim 10 or 11, wherein the pilot insertion unit (130) is adapted to receive N+1 OFDM signals over the first radio channel ($\underline{H}_1$), where N≥2, and to insert new pilot symbols into N of the received OFDM signals.

**13.** The relay station (110) of one of claims 10 to 12, wherein the plurality of chunks provided by the transmitter (100) comprises a plurality of chunks being correlated with each other, and wherein the relay station (110) causes a cancellation of the correlation between the chunks by reordering the chunks and wherein the pilot insertion unit (130) is further adapted for inserting pilot symbols based on the reordering of the chunks.

**14.** The relay station (110) of claim 13, wherein the first radio channel ($\underline{H}_1$) and the second radio channel ($\underline{H}_2$) have a plurality of chunks, the relay station (110) further comprising

a mapping unit (120) for reordering the plurality of chunks and for mapping the chunks from the plurality of chunks of the first radio channel ($\underline{H}_1$) to chunks of the second radio channel ($\underline{H}_2$) in accordance with a predetermined scheme.

**15.** The relay station (110) of claim 14, wherein the mapping unit (120) is adapted to rank the chunks of the first radio channel ($\underline{H}_1$) according to their transmission quality and the chunks of the second radio channel ($\underline{H}_2$) according to their transmission quality, wherein the reordering function associates chunks with corresponding ranks with each other.

**16.** A receiver (140) in a wireless Orthogonal Frequency Division Multiplexing, OFDM, communication system for receiving an OFDM signal comprising a plurality of chunks, where a chunk is a group of sub-carriers, over a radio channel from a transmitter (100) via a relay station (110), the radio channel comprising a first radio channel ($\underline{H}_1$)

between the transmitter (100) and the relay station (110) and a second radio channel ($H_2$) between the relay station (110) and the receiver (140), wherein each chunk includes at least one pilot symbol, the at least one pilot symbol being provided either by the relay station (110) or the transmitter (100), the receiver (140) comprising

a signal processing unit being adapted for receiving the plurality of chunks from the radio channel and for estimating the radio channel between the transmitter (100) and the receiver (140) based on an estimation of the first radio channel ($H_1$) and an estimation of the second radio channel ($H_2$), wherein the estimation of the first radio channel ($H_1$) is based on pilot symbols inserted by the transmitter (100), and the estimation of the second radio channel ($H_2$) is based on pilot symbols inserted by the relay station (110) according to a pilot insertion scheme and the relay station (110) being adapted for reordering the plurality of chunks received from the transmitter (100) according to a reordering function and for inserting the pilot symbols after the reordering, wherein

the receiver (140) being adapted for performing an inverse reordering function.

17. The receiver (140) of claim 16, wherein the estimation of the first radio channel ($H_1$) is based on pilot symbols provided by the transmitter (100) according to a first rate, and the estimation of the second radio channel ($H_2$) is based on pilot symbols provided by the relay station (110) according to a second rate, the first and the second rates being adapted to a temporal variability of the first radio channel ($H_1$) and the second radio channel ($H_2$).

18. The receiver of claims 16 or 17, wherein

the first radio channel ($H_1$) and the second radio channel ($H_2$) have a plurality of chunks and the chunks of the first radio channel ($H_1$) are reordered to chunks of the second radio channel ($H_2$) in accordance with the reordering function at the relay station (110);

the signal processing unit is adapted to

estimate the second channel ($H_2$) on the basis of the pilot symbols provided by the relay station (110);

perform an inverse reordering operation of the estimated channel from the relay station (110); estimate the signal transmitted from the relay station (110) to the receiver (140);

estimate the first channel ($H_1$) on the basis of the associated pilot symbols in the estimated signal; and

estimate the radio channel on the basis of the estimated first and second channels ($H_1$, $H_2$).

19. A wireless Orthogonal Frequency Division Multiplexing, OFDM, communication system, comprising:

a transmitter (100) adapted to provide an OFDM signal comprising a plurality of chunks and to transmit the OFDM signal over a first radio channel ($H_1$), the plurality of chunks includes pilot symbols according to a first rate;

a relay station (110) of one of claims 10 to 15, the relay station (110) being adapted for receiving the OFDM signal over the first channel ($H_1$), to reorder the plurality of chunks according to a reordering function and for inserting pilot symbols according to a second rate after the reordering, and to transmit the reordered plurality of chunks over a second radio channel ($H_2$) and

a receiver (140) of one of the claims 16 to 18, the receiver (140) being adapted to receive the OFDM signal over the second radio channel ($H_2$), and to estimate the channel between the transmitter (100) and the receiver (140).

20. The wireless Orthogonal Frequency Division Multiplexing (OFDM) communication system of claim 19, comprising at least one further relay station between the relay station (110) and the receiver (140).

**Patentansprüche**

1. Ein Verfahren für Funkkanalschätzung in einem drahtlosen Orthogonal-Frequenzmultiplex-, OFDM-, Kommunikationssystem, wobei das Verfahren einen Schritt des Weiterleitens eines OFDM-Signals an einer Relaisstation (110) zwischen einem Sender (100) und einem Empfänger (140) des drahtlosen Kommunikationssystems umfasst, wobei das OFDM-Signal eine Mehrzahl von Blöcken umfasst, wobei ein Block eine Gruppe von Unterträgern ist, wobei der Funkkanal zwischen dem Sender (100) und dem Empfänger (140) einen ersten Funkkanal ($H_1$) zwischen dem Sender (100) und der Relaisstation (110) und einen zweiten Funkkanal ($H_2$) zwischen der Relaisstation (110) und dem Empfänger (140) umfasst, wobei das Verfahren einen Schritt des Neuordnens der Blöcke des OFDM-Signals gemäß einer Neuordnungsfunktion an der Relaisstation (110) umfasst, wobei das Verfahren folgenden Schritt umfasst:

Schätzen des Funkkanals zwischen dem Sender (100) und dem Empfänger (140) basierend auf einer Schätzung des ersten Funkkanals ($H_1$) und einer Schätzung des zweiten Funkkanals ($H_2$),

wobei die Schätzung des ersten Funkkanals ($\underline{H}_1$) auf Pilotsymbolen basiert, die durch den Sender (100) bereitgestellt werden, und die Schätzung des zweiten Funkkanals ($\underline{H}_2$) auf Pilotsymbolen basiert, die durch die Relaisstation (110) in das OFDM-Signal eingefügt werden, wobei die Relaisstation (110) angepasst ist zum Einfügen der Pilotsymbole in das OFDM-Signal nach dem Neuordnen.

2. Das Verfahren gemäß Anspruch 1, das einen Schritt des Einfügen von Pilotsymbolen an dem Sender (100) gemäß einer ersten Rate umfasst, und das Einfügen von Pilotsymbolen an der Relaisstation (110) gemäß einer zweiten Rate, wobei die erste und die zweite Rate an eine zeitliche Variabilität des ersten Funkkanals ($\underline{H}_1$) und des zweiten Funkkanals ($\underline{H}_2$) angepasst sind.

3. Das Verfahren gemäß Anspruch 1 oder 2, bei dem der Schritt des Schätzens des Funkkanals zwischen dem Sender (100) und dem Empfänger (140) folgende Schritte umfasst:

   Schätzen des Signals, das von der Relaisstation (110) zu dem Empfänger (140) gesendet wird;
   Schätzen des ersten Kanals ($\underline{H}_1$) auf der Basis der zugeordneten Pilotsymbole in dem geschätzten Signal.

4. Das Verfahren gemäß Anspruch 2 oder 3, das ferner die folgenden Schritte umfasst:

   (a) Senden der Mehrzahl von Blöcken auf dem ersten Funkkanal ($\underline{H}_1$) zwischen dem Sender (100) und der Relaisstation (110), wobei jeder Block zumindest ein Pilotsymbol umfasst;
   (b) Empfangen der Mehrzahl von Blöcken an der Relaisstation (110);
   (c) Einfügen neuer Pilotsymbole in zumindest einen der empfangenen Blöcke gemäß der zweiten Rate;
   (d) Senden der Mehrzahl von Blöcken auf dem zweiten Funkkanal ($\underline{H}_2$) zwischen der Relaisstation (110) und dem Empfänger (140);
   (e) Empfangen der Mehrzahl von Blöcken an dem Empfänger (140),

   wobei die erste und die zweite Rate an die zeitliche Variabilität des ersten Funkkanals ($\underline{H}_1$) und des zweiten Funkkanals ($\underline{H}_2$) angepasst sind.

5. Das Verfahren gemäß Anspruch 4, bei dem Schritt (a) das Senden von N + 1 Blöcken umfasst, wobei $N \geq 2$, und Schritt (c) das Einfügen der Pilotsymbole in N empfangene Blöcke umfasst.

6. Das Verfahren gemäß einem der Ansprüche 1 bis 5, bei dem das Signal, das durch den Sender (100) bereitgestellt wird, Blöcke umfasst, die miteinander korreliert sind, und wobei die Relaisstation (110) eine Aufhebung der Korrelation zwischen den Blöcken verursacht durch das Neuordnen der Blöcke, und wobei das Einfügen der Pilotsymbole an der Relaisstation (110) ferner an das Neuordnen der Blöcke angepasst ist.

7. Das Verfahren gemäß einem der Ansprüche 1 bis 6, bei dem die Blöcke des ersten Funkkanals ($\underline{H}_1$) gemäß ihrer Übertragungsqualität rangmäßig bewertet werden, und die Blöcke des zweiten Funkkanals ($\underline{H}_2$) gemäß ihrer Übertragungsqualität rangmäßig bewertet werden, wobei die Neuordnungsfunktion Blöcke mit entsprechenden Rängen einander zuordnet.

8. Das Verfahren gemäß einem der Ansprüche 3 bis 7, bei dem der Schritt des Schätzens des Signals, das von der Relaisstation (110) zu dem Empfänger (140) gesendet wird, das Durchführen einer inversen Neuordnungsoperation umfasst.

9. Das Verfahren gemäß einem der Ansprüche 1 bis 8, bei dem das drahtlose OFDM-Kommunikationssystem zumindest eine weitere Relaisstation umfasst, die ein OFDM-Signal von der Relaisstation (110) zu dem Empfänger (140) weiterleitet, wobei Schritt (d) folgende Schritte umfasst:

   Senden der Mehrzahl von Blöcken über den zweiten Funkkanal ($\underline{H}_2$) zwischen der Relaisstation (110) und der weiteren Relaisstation;
   Empfangen der Mehrzahl von Blöcken an der weiteren Relaisstation;
   Einfügen von Pilotsymbolen in zumindest einen der empfangenen Blöcke;
   Senden der Mehrzahl von Blöcken über einen dritten Funkkanal zwischen der weiteren Relaisstation und dem Empfänger (140); und
   wobei der Schritt des Schätzens des Funkkanals zwischen dem Sender (100) und dem Empfänger (140) auf einer Schätzung des ersten Funkkanals ($\underline{H}_1$), einer Schätzung des zweiten Funkkanals ($\underline{H}_2$) und einer Schätzung

des dritten Funkkanals basiert,

wobei die Schätzung des ersten Funkkanals ($H_1$) auf den Pilotsymbolen basiert, die durch den Sender (100) bereitgestellt werden, die Schätzung des zweiten Funkkanals ($H_2$) auf den Pilotsymbolen basiert, die durch die Relaisstation (110) bereitgestellt werden, und die Schätzung des dritten Funkkanals auf den Pilotsymbolen basiert, die durch die weitere Relaisstation bereitgestellt werden.

10. Eine Relaisstation (110) in einem drahtlosen Orthogonal-Frequenzmultiplex-, OFDM-, Kommunikationssystem zum Weiterleiten eines OFDM-Signals, das auf einem ersten Funkkanal ($H_1$) empfangen wird, an einen zweiten Funkkanal ($H_2$), wobei das OFDM-Signal eine Mehrzahl von Blöcken umfasst, wobei ein Block eine Gruppe von Unterträgern ist, wobei das OFDM-Signal, das auf dem ersten Funkkanal ($H_1$) empfangen wird, durch einen Sender (100) bereitgestellt wird und Pilotsymbole umfasst, und die Relaisstation (110) angepasst ist zum Neuordnen der Blöcke gemäß einer Neuordnungsfunktion, wobei die Relaisstation (110) folgende Merkmale umfasst:

eine Piloteinfügungseinheit (130) zum Bereitstellen von Pilotsymbolen für zumindest einen Block des OFDM-Signals, der auf dem ersten Funkkanal ($H_1$) empfangen wird, gemäß einem Piloteinfügungsschema nach der Neuordnung, wobei die Relaisstation (110) ferner konfiguriert ist zum Weiterleiten des OFDM-Signals, das die Pilotsymbole umfasst, und des OFDM-Signals, das die Pilotsymbole umfasst, die durch den Sender (100) bereitgestellt werden, an den zweiten Funkkanal ($H_2$).

11. Die Relaisstation (110) gemäß Anspruch 10, bei der die Mehrzahl von Blöcken, die auf dem ersten Funkkanal ($H_1$) empfangen werden, Pilotsymbole gemäß einer ersten Rate umfasst, und die Piloteinfügungseinheit (130) angepasst ist zum Einfügen von Pilotsymbolen für zumindest einen der Mehrzahl von Blöcken, die auf dem ersten Funkkanal ($H_1$) empfangen werden, gemäß einer zweiten Rate, wobei die erste und die zweite Rate an eine zeitliche Variabilität des ersten Funkkanals ($H_1$) und des zweiten Funkkanals ($H_2$) angepasst sind.

12. Die Relaisstation (110) gemäß Anspruch 10 oder 11, bei der die Piloteinfügungseinheit (130) angepasst ist, um N + 1 OFDM-Signale über den ersten Funkkanal ($H_1$) zu empfangen, wobei N ≥ 2, und um neue Pilotsymbole in N der empfangenen OFDM-Signale einzufügen.

13. Die Relaisstation (110) gemäß einem der Ansprüche 10 bis 12, bei der die Mehrzahl von Blöcken, die durch den Sender (100) bereitgestellt werden, eine Mehrzahl von Blöcken umfasst, die miteinander korreliert sind, und wobei die Relaisstation (110) eine Aufhebung der Korrelation zwischen den Blöcken verursacht durch Neuordnen der Blöcke, und wobei die Piloteinfügungseinheit (130) ferner angepasst ist zum Einfügen von Pilotsymbolen basierend auf der Neuordnung der Blöcke.

14. Die Relaisstation (110) gemäß Anspruch 13, bei der der erste Funkkanal ($H_1$) und der zweite Funkkanal ($H_2$) eine Mehrzahl von Blöcken aufweisen, wobei die Relaisstation (110) ferner folgendes Merkmal umfasst:

eine Abbildungseinheit (120) zum Neuordnen der Mehrzahl von Blöcken und zum Abbilden der Blöcke von der Mehrzahl von Blöcken des ersten Funkkanals ($H_1$) auf Blöcke des zweiten Funkkanals ($H_2$) gemäß einem vorbestimmten Schema.

15. Die Relaisstation (110) gemäß Anspruch 14, bei der die Abbildungseinheit (120) angepasst ist, um die Blöcke des ersten Funkkanals ($H_1$) und die Blöcke des zweiten Funkkanals ($H_2$) gemäß ihrer Übertragungsqualität rangmäßig zu bewerten, wobei die Neuordnungsfunktion Blöcke mit entsprechenden Rängen einander zuordnet.

16. Ein Empfänger (140) in einem drahtlosen Orthogonal-Frequenzmultiplex-, OFDM-, Kommunikationssystem zum Empfangen eines OFDM-Signals, das eine Mehrzahl von Blöcken umfasst, wobei ein Block eine Gruppe von Unterträgern ist, über einen Funkkanal von einem Sender (100) über eine Relaisstation (110), wobei der Funkkanal einen ersten Funkkanal ($H_1$) zwischen dem Sender (100) und der Relaisstation (110) und einen zweiten Funkkanal ($H_2$) zwischen der Relaisstation (110) und dem Empfänger (140) umfasst, wobei jeder Block zumindest ein Pilotsymbol umfasst, wobei das zumindest eine Pilotsymbol entweder durch die Relaisstation (110) oder durch den Sender (100) bereitgestellt wird, wobei der Empfänger (140) folgende Merkmale umfasst:

eine Signalverarbeitungseinheit, die angepasst ist zum Empfangen der Mehrzahl von Blöcken von dem Funkkanal und zum Schätzen des Funkkanals zwischen dem Sender (100) und dem Empfänger (140) basierend auf einer Schätzung des ersten Funkkanals ($H_1$) und einer Schätzung des zweiten Funkkanals ($H_2$), wobei die Schätzung des ersten Funkkanals ($H_1$) auf Pilotsymbolen basiert, die durch den Sender (100) eingefügt werden, und die Schätzung des zweiten Funkkanals ($H_2$) auf Pilotsymbolen basiert, die durch die Relaisstation (110) gemäß einem Piloteinfügungsschema eingefügt werden, und die Relaisstation (110) angepasst ist zum Neuordnen der Mehrzahl von Blöcken, die von dem Sender (100) empfangen werden, gemäß einer Neuordnungsfunktion, und zum Einfügen der Pilotsymbole nach dem Neuordnen, wobei
der Empfänger (140) angepasst ist zum Durchführen einer inversen Neuordnungsfunktion.

17. Der Empfänger (140) gemäß Anspruch 16, bei dem die Schätzung des ersten Funkkanals ($H_1$) auf Pilotsymbolen basiert, die durch den Sender (100) gemäß einer ersten Rate bereitgestellt werden, und die Schätzung des zweiten Funkkanals ($H_2$) auf Pilotsymbolen basiert, die durch die Relaisstation (110) gemäß einer zweiten Rate bereitgestellt werden, wobei die erste und die zweite Rate an eine zeitliche Variabilität des ersten Funkkanals ($H_1$) und des zweiten Funkkanals ($H_2$) angepasst sind.

18. Der Empfänger gemäß Anspruch 16 oder 17, bei dem
der erste Funkkanal ($H_1$) und der zweite Funkkanal ($H_2$) eine Mehrzahl von Blöcken aufweisen, und die Blöcke des ersten Funkkanals ($H_1$) neu geordnet werden zu Blöcken des zweiten Funkkanals ($H_2$), gemäß der Neuordnungsfunktion an der Relaisstation (110);
die Signalverarbeitungseinheit angepasst ist zum
Schätzen des zweiten Kanals ($H_2$) auf der Basis der Pilotsymbole, die durch die Relaisstation (110) bereitgestellt werden;
Durchführen einer inversen Neuordnungsoperation des geschätzten Kanals von der Relaisstation (110);
Schätzen des Signals, das von der Relaisstation (110) zu dem Empfänger (140) gesendet wird;
Schätzen des ersten Kanals ($H_1$) auf der Basis der zugeordneten Pilotsymbole in dem geschätzten Signal; und
Schätzen des Funkkanals auf der Basis des geschätzten ersten und zweiten Kanals ($H_1$, $H_2$).

19. Ein drahtloses Orthogonal-Frequenzmultiplex-, OFDM-, Kommunikationssystem, das folgende Merkmale umfasst:

einen Sender (100), der angepasst ist, um ein OFDM-Signal bereitzustellen, das eine Mehrzahl von Blöcken umfasst, und um das OFDM-Signal über einen ersten Funkkanal ($H_1$) zu senden, wobei die Mehrzahl von Blöcken Pilotsymbole gemäß einer ersten Rate umfasst;
eine Relaisstation (110) gemäß einem der Ansprüche 10 bis 15, wobei die Relaisstation (110) angepasst ist zum Empfangen des OFDM-Signals über den ersten Kanal ($H_1$), um die Mehrzahl von Blöcken gemäß einer Neuordnungsfunktion neu zu ordnen, und zum Einfügen von Pilotsymbolen gemäß einer zweiten Rate nach der Neuordnung, und zum Senden der neu geordneten Mehrzahl von Blöcken über einen zweiten Funkkanal ($H_2$), und
einen Empfänger (140) gemäß einem der Ansprüche 16 bis 18, wobei der Empfänger (140) angepasst ist, um das OFDM-Signal über den zweiten Funkkanal ($H_2$) zu empfangen, und den Kanal zwischen dem Sender (100) und dem Empfänger (140) zu schätzen.

20. Das drahtlose Orthogonal-Frequenzmultiplex-, OFDM-, Kommunikationssystem gemäß Anspruch 19, das zumindest eine weitere Relaisstation zwischen der Relaisstation (110) und dem Empfänger (140) umfasst.

**Revendications**

1. Méthode d'estimation de canal de radiocommunication dans un système de communication à Multiplexage par Division de Fréquence Orthogonal, OFDM, sans fil, la méthode comprenant une étape consistant à relayer un signal OFDM à une station de relais (110) entre un émetteur (100) et un récepteur (140) du système de communication sans fil, le signal OFDM comprenant une pluralité de fragments, où un fragment est un groupe de sous-porteuses, le canal de radiocommunication entre l'émetteur (100) et le récepteur (140) comprenant un premier canal de radiocommunication ($H_1$) entre l'émetteur (100) et la station de relais (110) et un deuxième canal de radiocommunication ($H_2$) entre la station de relais (110) et le récepteur (140), la méthode comprenant une étape consistant à réarranger les fragments du signal OFDM selon une fonction de réarrangement à la station de relais (110), la méthode comprenant :

estimer le canal de radiocommunication entre l'émetteur (100) et le récepteur (140) sur base d'une estimation du premier canal de radiocommunication ($H_1$) et d'une estimation du deuxième canal de radiocommunication ($H_2$),
dans laquelle l'estimation du premier canal de radiocommunication ($H_1$) est basée sur des symboles pilotes fournis par l'émetteur (100), et l'estimation du deuxième canal de radiocommunication ($H_2$) est basée sur des symboles pilotes insérés dans le signal OFDM par la station de relais (110), la station de relais (110) étant adaptée pour insérer les symboles pilotes dans le signal OFDM après le réarrangement.

2. Méthode selon la revendication 1, comprenant une étape consistant à insérer des symboles pilotes à l'émetteur (100) selon un premier taux et à insérer des symboles pilotes à la station de relais (110) selon un deuxième taux, les premier et deuxième taux étant adaptés à une variabilité dans le temps du premier canal de radiocommunication ($H_1$) et du deuxième canal de radiocommunication ($H_2$).

3. Méthode selon la revendication 1 ou 2, dans laquelle l'étape consistant à estimer le canal de radiocommunication entre l'émetteur (100) et le récepteur (140) comprend:

   estimer le signal transmis de la station de relais (110) au récepteur (140);
   estimer le premier canal ($H_1$) sur base des symboles pilotes associés dans le signal estimé.

4. Méthode selon la revendication 2 ou 3, comprenant par ailleurs les étapes suivantes consistant à:

   (a) transmettre la pluralité de fragments sur le premier canal de radiocommunication ($H_1$) entre l'émetteur (100) et la station de relais (110), chaque fragment comprenant au moins un symbole pilote;
   (b) recevoir la pluralité de fragments à la station de relais (110);
   (c) insérer de nouveaux symboles pilotes dans au moins l'un des fragments reçus, selon le deuxième taux;
   (d) transmettre la pluralité de fragments sur le deuxième canal de radiocommunication ($H_2$) entre la station de relais (110) et le récepteur (140);
   (e) recevoir la pluralité de fragments au récepteur (140),
   les premier et deuxième taux étant adaptés à la variabilité dans le temps du premier canal de radiocommunication ($H_{1)}$) et du deuxième canal de radiocommunication ($H_2$).

5. Méthode selon la revendication 4, dans lequel l'étape (a) comprend la transmission de N+1 fragments, où $N \geq 2$, et l'étape (c) comprend l'insertion des symboles pilotes dans N fragments reçus.

6. Méthode selon l'une des revendications 1 à 5, dans laquelle le signal fourni par l'émetteur (100) comprend des fragments corrélés entre eux, et dans laquelle la station de relais (110) provoque une annulation de la corrélation entre les fragments en réarrangeant les fragments, et dans laquelle l'insertion des symboles pilotes à la station de relais (110) est par ailleurs adaptée pour le réarrangement des fragments.

7. Méthode selon l'une des revendications 1 à 6, dans laquelle les fragments du premier canal de radiocommunication ($H_1$) sont rangés selon leur qualité de transmission, et les fragments du deuxième canal de radiocommunication ($H_2$) sont rangés selon leur qualité de transmission, la fonction de réarrangement associant l'un avec l'autre les fragments à rangs correspondants.

8. Méthode selon l'une des revendications 3 à 7, dans laquelle l'étape consistant à estimer le signal transmis de la station de relais (110) au récepteur (140) comprend le fait d'effectuer une opération de réarrangement inverse.

9. Méthode selon l'une des revendications 1 à 8, dans laquelle le système de communication OFDM sans fil comprend au moins une autre station de relais qui relaie un signal OFDM de la station de relais (110) au récepteur (140), dans laquelle l'étape (d) comprend:

   transmettre la pluralité de fragments sur le deuxième canal de radiocommunication ($H_2$) entre la station de relais (110) et l'autre station de relais;
   recevoir la pluralité de fragments à l'autre station de relais;
   insérer des symboles pilotes dans au moins l'un des fragments reçus;
   transmettre la pluralité de fragments sur un troisième canal de radiocommunication entre l'autre station de relais et le récepteur (140); et
   dans laquelle l'étape consistant à estimer le canal de radiocommunication entre l'émetteur (100) et le récepteur (140) est basée sur une estimation du premier canal de radiocommunication ($H_1$), une estimation du deuxième canal de radiocommunication ($H_2$), et une estimation du troisième canal de radiocommunication,
   dans laquelle l'estimation du premier canal de radiocommunication ($H_1$) est basée sur les symboles pilotes fournis par l'émetteur (100), l'estimation du deuxième canal de radiocommunication ($H_2$) est basée sur les symboles pilotes fournis par la station de relais (110) et l'estimation du troisième canal de radiocommunication est basée sur les symboles pilotes fournis par l'autre station de relais.

**10.** Station de relais (110) dans un système de communication à Multiplexage par Division de Fréquence Orthogonal, OFDM, sans fil pour relayer un signal OFDM reçu sur un premier canal de radiocommunication ($\underline{H}_1$) vers un deuxième canal de radiocommunication ($\underline{H}_2$), le signal OFDM comprenant une pluralité de fragments, où un fragment est un groupe de sous-porteuses, le signal OFDM reçu sur le premier canal de radiocommunication ($\underline{H}_1$) étant fourni par un émetteur (100) et comportant des symboles pilotes, et la station de relais (110) étant adaptée pour réarranger les fragments selon une fonction de réarrangement, la station de relais (110) comprenant:

une unité d'insertion de pilotes (130) destinée à fournir des symboles pilotes pour au moins un fragment du signal OFDM reçu sur le premier canal de radiocommunication ($\underline{H}_1$) selon un schéma d'insertion de pilotes après le réarrangement, où la station de relais (110) est par ailleurs configurée pour transmettre le signal OFDM comportant les symboles pilotes et le signal OFDM comportant les symboles pilotes fournis par l'émetteur (100) sur le deuxième canal de radiocommunication ($\underline{H}_2$).

**11.** Station de relais (110) selon la revendication 10, dans laquelle la pluralité de fragments reçus sur le premier canal de radiocommunication ($\underline{H}_1$) comporte des symboles pilotes selon un premier taux, et l'unité d'insertion de pilotes (130) est adaptée pour insérer des symboles pilotes pour au moins l'un de la pluralité de fragments reçus sur le premier canal de radiocommunication ($\underline{H}_1$) selon un deuxième taux, les premier et deuxième taux étant adaptés à une variabilité dans le temps du premier canal de radiocommunication ($\underline{H}_1$) et du deuxième canal de radiocommunication ($\underline{H}_2$).

**12.** Station de relais (110) selon la revendication 10 ou 11, dans laquelle l'unité d'insertion de pilotes (130) est adaptée pour recevoir N+ 1 signaux OFDM via le premier canal de radiocommunication ($\underline{H}_1$), où N≥2, et pour insérer de nouveaux symboles pilotes dans N des signaux OFDM reçus.

**13.** Station de relais (110) selon l'une des revendications 10 à 12, dans laquelle la pluralité de fragments fournis par l'émetteur (100) comprend une pluralité de fragments corrélés entre eux, et dans laquelle la station de relais (110) provoque une annulation de la corrélation entre les fragments en réarrangeant les fragments et dans laquelle l'unité d'insertion de pilotes (130) est par ailleurs adaptée pour insérer des symboles pilotes sur base du réarrangement des fragments.

**14.** Station de relais (110) selon la revendication 13, dans laquelle le premier canal de radiocommunication ($\underline{H}_1$) et le deuxième canal de radiocommunication ($\underline{H}_2$) ont une pluralité de fragments, la station de relais (110) comprenant par ailleurs:

une unité de mappage (120) destinée à réarranger la pluralité de fragments et à effectuer le mappage des fragments de la pluralité de fragments du premier canal de radiocommunication ($\underline{H}_1$) aux fragments du deuxième canal de radiocommunication ($\underline{H}_2$) selon un schéma prédéterminé.

**15.** Station de relais (110) selon la revendication 14, dans laquelle l'unité de mappage (120) est adaptée pour ranger les fragments du premier canal de radiocommunication ($\underline{H}_1$) selon leur qualité de transmission et les fragments du deuxième canal de radiocommunication ($\underline{H}_2$) selon leur qualité de transmission, dans laquelle la fonction de réarrangement associe entre eux les fragments à rangs correspondants.

**16.** Récepteur (140) dans un système de communication à Multiplexage par Division de Fréquence Orthogonal, OFDM, sans fil pour recevoir un signal OFDM comprenant une pluralité de fragments, où un fragment est un groupe de sous-porteuses, sur un canal de radiocommunication d'un émetteur (100) via une station de relais (110), le canal de radiocommunication comprenant un premier canal de radiocommunication ($\underline{H}_1$) entre l'émetteur (100) et la station de relais (110) et un deuxième canal de radiocommunication ($\underline{H}_2$) entre la station de relais (110) et le récepteur (140), où chaque fragment comporte au moins un symbole pilote, l'au moins un symbole pilote étant fourni soit par la station de relais (110), soit par l'émetteur (100), le récepteur (140) comprenant une unité de traitement de signal adaptée pour recevoir la pluralité de fragments du canal de radiocommunication et pour estimer le canal de radiocommunication entre l'émetteur (100) et le récepteur (140) sur base d'une estimation du premier canal de radiocommunication ($\underline{H}_1$) et d'une estimation du deuxième canal de radiocommunication ($\underline{H}_2$), où l'estimation du premier canal de radiocommunication ($\underline{H}_1$) est basée sur les symboles pilotes insérés par l'émetteur (100), et l'estimation du deuxième canal de radiocommunication ($\underline{H}_2$) est basée sur les symboles pilotes insérés par la station de relais (110) selon un schéma d'insertion de pilotes, et la station de relais (110) est adaptée pour réarranger la pluralité de fragments reçus de l'émetteur (100) selon une fonction de réarrangement et pour insérer les symboles pilotes après le réarrangement, dans lequel

le récepteur (140) est adapté pour effectuer une fonction de réarrangement inverse.

17. Récepteur (140) selon la revendication 16, dans lequel l'estimation du premier canal de radiocommunication ($\underline{H}_1$) est basée sur les symboles pilotes fournis par l'émetteur (100) selon un premier taux, et l'estimation du deuxième canal de radiocommunication ($\underline{H}_2$) est basée sur les symboles pilotes fournis par la station de relais (110) selon un deuxième taux, les premier et deuxième taux étant adaptés à un variabilité dans le temps du premier canal de radiocommunication ($\underline{H}_1$) et du deuxième canal de radiocommunication ($\underline{H}_2$).

18. Récepteur selon la revendication 16 ou 17, dans lequel

le premier canal de radiocommunication ($\underline{H}_1$) et le deuxième canal de radiocommunication ($\underline{H}_2$) ont une pluralité de fragments et les fragments du premier canal de radiocommunication ($\underline{H}_1$) sont réarrangés à des fragments du deuxième canal de radiocommunication ($\underline{H}_2$) selon la fonction de réarrangement à la station de relais (110);
l'unité de traitement de signal est adaptée pour
estimer le deuxième canal ($\underline{H}_2$) sur base des symboles pilotes fournis par la station de relais (110);
effectuer une opération de réarrangement inverse du canal estimé de la station de relais (110);
estimer le signal transmis de la station de relais (110) au récepteur (140);
estimer le premier canal ($\underline{H}_1$) sur base des symboles pilotes associés dans le signal estimé; et
estimer le canal de radiocommunication sur base des premier et deuxième canaux ($\underline{H}_1$, $\underline{H}_2$) estimés.

19. Système de communication à Multiplexage par Division de Fréquence Orthogonal, OFDM, sans fil, comprenant:

un émetteur (100) adapté pour fournir un signal OFDM comprenant une pluralité de fragments et pour transmettre le signal OFDM sur un premier canal de radiocommunication ($\underline{H}_1$), la pluralité de fragments comportant des symboles pilotes selon un premier taux;
une station de relais (110) selon l'une des revendications 10 à 15, la station de relais (110) étant adaptée pour recevoir le signal OFDM via le premier canal ($\underline{H}_1$), pour réarranger la pluralité de fragments selon une fonction de réarrangement et pour insérer des symboles pilotes selon un deuxième taux après le réarrangement, et pour transmettre la pluralité de fragments réarrangés via un deuxième canal de radiocommunication ($\underline{H}_2$); et
un récepteur (140) selon l'une des revendications 16 à 18, le récepteur (140) étant adapté pour recevoir le signal OFDM via le deuxième canal de radiocommunication ($\underline{H}_2$), et pour estimer le canal entre l'émetteur (100) et le récepteur (140).

20. Système de communication à Multiplexage par Division de Fréquence Orthogonal, OFDM, sans fil selon la revendication 19, comprenant au moins une autre station de relais entre la station de relais (110) et le récepteur (140).

## FIG 1

## FIG 2

# FIG 3

Base Station ⟋100    $H_1$    ⟋110  ⟋800  ⟋802  ⟋804  Relay Station  ⟋806  ⟋812  ⟋814  ⟋816  ⟋818    $H_2$    ⟋140  Mobil Station

$n_{re,i}$    $n_{ms,i}$

| OFDM Transmitter with adaptive Modulation | Multipath Channel | ⊕ | Remove CP | S/P | FFT | Store & Forward | Subcarrier recordering | IFFT | P/S | Add CP | Multipath Channel | ⊕ | OFDM Receiver |

$r_{re,i}$   $r'_{re,i}$

$r'_{i,0}$  $\hat{x}_{i,0}$  $\hat{x}_{i,r(0)}$  $s'_{i,r(0)}$
$r'_{i,1}$  $\hat{x}_{i,1}$                          $s'_{i,r(1)}$
$r'_{i,N_f}$  $\hat{x}_{i,N_f}$  $\hat{x}_{i,r(N_f)}$  $s'_{i,r(N_f)}$   $s'_i$   $t'_i$

$N_f$

| Channel est. | Calc. of recordering funktion v (k) | Pilot Grid Generator |

$H_1$   $H_2$

Ch. estimates from previous uplink transmission

⟋808   ⟋810   ⟋350

# FIG 4

| A1-NLOS | | B1-LOS | | B1-NLOS | |
|---|---|---|---|---|---|
| Delay | Power/K | Delay | Power/K | Delay | Power/K |
| 0ns | 0dB | 0ns | 0 dB/ 16dB | 0ns | -1,25 dB/ 9dB |
| 5ns | -1,6 dB | 10ns | -1,2 dB/ 9dB | 10ns | 0 dB/ 6dB |
| 10ns | -2,5 dB | 30ns | -4,4 dB/ 3dB | 40ns | -0,38 dB |
| 15ns | -3,9 dB | 45ns | -8,4dB | 60ns | -0,1 dB |
| 20ns | -5,2 dB | 65ns | -13dB | 85ns | -0,73 dB |
| 25ns | -5,6 dB | 85ns | -15,1dB | 110ns | -0,63 dB |
| 30ns | -6 dB | 105ns | 16,1dB | 135ns | -1,78 dB |
| 35ns | -7,3 dB | | | 165ns | -4,07 dB |
| 40ns | -6,8 dB | | | 190ns | -5,12 dB |
| 45ns | -5,8 dB | | | 220ns | -6,34 dB |
| 50ns | -7,7 dB | | | 245ns | -7,35 dB |
| 60ns | -8,5 dB | | | 270ns | -8,86 dB |
| 70ns | -8,4 dB | | | 300ns | -10,1 dB |
| 80ns | -13 dB | | | 325ns | -10,5 dB |
| 90ns | -11,8 dB | | | 350ns | -11,3 dB |
| 100ns | -12,8 dB | | | 375ns | -12,6 dB |
| 110ns | -17,6 dB | | | 405ns | -13,9 dB |
| 120ns | -20 dB | | | 430ns | -14,1 dB |
| | | | | 460ns | -15,3 dB |
| | | | | 485ns | -16,3 dB |

# FIG 5

## FIG 6

Legend:
- Unordered, UNI, NoAM
- Unordered, UNIPM, NoAM
- Chunk, UNI, NoAM
- Chunk, UNIPM, NoAM
- Unordered, UNI, AM
- Unordered, UNIPM, AM
- Chunk, UNI, AM
- Chunk, UNIPM, AM

Y-axis: Channel estimation error (MSE), dB
X-axis: $SNR_{ms}$, dB

## FIG 7

FIG 8

# FIG 9

206

200

204

202

Transfer function, dB

-25
-30
-35
-40
-45
-50
-55
-60
-65
-70

0    20    40    60    80    100

f, MHz

1. hop channel
2. hop channel
overall channel

# FIG 10

302

Δf

300₁    300₂    310    300ₙ

## FIG 11

Adaptive
subcarrier
mapping v(k)

400

400

402

408

404

406

Transfer function, dB

f, MHz

1. hop
1. hop, recordered
2. hop
1. & 2. hop, combined

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 50166941 A

- EP 1564911 A1

### Non-patent literature cited in the description

- **MOHR W. ; R. LUDER ; KARL-HEINZ MÖHR-MANN.** Data Rate Estimates, Range Calculations and Spectrum Demands for New Elements of Systems beyond IMT-2000. *5th International Symposium on Wireless Personal Multimedia Communications,* October 2002, vol. 1, 37-46
- **LANEMAN J. NICHOLAS ; DAVID N.C. TSE ; GREGORY W. WORNELL.** Cooperative Diversity in Wireless Networks: Efficient Protocols and Outage Behavior. *IEEE Transactions on Information Theory*
- User Cooperation Diversity, Part I, System description. **SENDONARIS ANDREW ; ELZA ERKIP ; BEHNAAM AAZHANG.** IEEE Transactions on Communications. November 2003, vol. 15, 1927-1938
- **SENDONARIS ANDREW ; ELZA ERKIP ; BEHNAAM AAZHANG.** User Cooperation Diversity, Part II, Implementation Aspects and Performance Analysis. *IEEE Transactions on Communications,* November 2003, vol. 15, 1939-1948
- **HAMMERSTROEM INGMAR ; MARC KUHN ; BORIS RANKOV.** Space-Time Processing for Cooperative Relay Networks. *Proc. IEEE Vehicular Technology Conference,* October 2004
- **WITTNEBEN ARMIN ; BORIS RANKOV.** Impact of Cooperative Relays on the Capacity of Rank-Deficient MIMO Channels. *Proceedings of the 12th IST Summit on Mobile and Wireless Communications,* June 2003, 421-425
- **HU H. ; H. YANIKOMEROGLU ; D.D. FALCONER ; S. PERIYALWAR.** Range extension without capacity penalty in cellular networks with digital fixed relays. *Proceedings of IEEE Global Telecommunications Conference,* November 2004
- **HERDIN MARKUS.** A Chunk-Based OFDM Amplify-and-Forward Relaying Scheme for 4G Mobile Radio Systems. *ICC,* 2006
- **ROBERT F.H. FISCHER ; JOHANNES B. HUBER.** A new loading algorithm for discrete multi tone transmission. *Proceedings of the Global Telecommunications Conference,* November 2004, vol. 1, 724-728